(19) Europäisches Patentamt
European Patent Office
Office européen des brevets

(11) **EP 4 768 925 A1**

(12) **EUROPEAN PATENT APPLICATION**
published in accordance with Art. 153(4) EPC

(43) Date of publication:
**01.07.2026 Bulletin 2026/27**

(21) Application number: **24895755.7**

(22) Date of filing: **14.08.2024**

(51) International Patent Classification (IPC):
**G01R 27/26** (2006.01)    **H04M 1/72448** (2021.01)

(52) Cooperative Patent Classification (CPC):
**G01R 27/26; G01V 3/00; H04M 1/72448**

(86) International application number:
**PCT/CN2024/112126**

(87) International publication number:
**WO 2025/112654 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.11.2023 CN 202311637615**

(71) Applicant: **Honor Device Co., Ltd.
Shenzhen, Guangdong 518040 (CN)**

(72) Inventors:
• **MENG, Hang
Shenzhen, Guangdong 518040 (CN)**
• **YE, Chunhui
Shenzhen, Guangdong 518040 (CN)**
• **XU, Yuan
Shenzhen, Guangdong 518040 (CN)**
• **SANG, Xiangyuan
Shenzhen, Guangdong 518040 (CN)**

(74) Representative: **Gill Jennings & Every LLP
The Broadgate Tower
20 Primrose Street
London EC2A 2ES (GB)**

(54) **CAPACITIVE PROXIMITY SENSOR ADJUSTMENT METHOD APPLIED TO FOLDABLE DEVICE, AND ELECTRONIC DEVICE**

(57) This application discloses an adjustment method for a capacitive proximity sensor applied to a foldable device, and an electronic device, and relates to the field of terminals. The method includes: The electronic device may detect a capacitance value through the capacitive proximity sensor. A capacitance value detected by the capacitive proximity sensor is a sum of a human body proximity capacitance value and an environmental capacitance value. When it is detected that a foldable screen is changed from a non-fully folded form to a fully folded form, the electronic device may adjust environmental offset data 1 to environmental offset data 2 based on a currently determined environmental capacitance value. The environmental offset data 1 is for eliminating an environmental capacitance value when the foldable screen is not in the fully folded form, and the environmental offset data 2 is for eliminating an environmental capacitance value when the foldable screen is in the fully folded form. When the foldable screen is in the fully folded form, the electronic device may detect, based on the environmental offset data 2, the human body proximity capacitance value through the capacitive proximity sensor.

FIG. 2A

**Description**

This application claims priority to Chinese Patent Application No. 202311637615.0, filed with the China National Intellectual Property Administration on November 30, 2023 and entitled "METHOD FOR ADJUSTING CAPACITIVE PROXIMITY SENSOR APPLIED TO FOLDABLE DEVICE, AND ELECTRONIC DEVICE", which is incorporated herein by reference in its entirety.

**TECHNICAL FIELD**

This application relates to the field of terminals, and in particular, to a method for adjusting a capacitive proximity sensor applied to a foldable device, and an electronic device.

**BACKGROUND**

With development of terminal technologies, use frequencies of electronic devices become increasingly high in daily life. When a user uses an electronic device, excessive electromagnetic radiation of the electronic device affects human body health. Currently, a specific absorption rate (specific absorption rate, SAR, which may also be referred to as an electromagnetic radiation absorption ratio) is usually used to measure an energy absorption rate of a human body when the human body is exposed to a radio frequency electromagnetic field. A smaller SAR value indicates a smaller amount of electromagnetic radiation absorbed by the human body.

To reduce an impact of the electromagnetic radiation when the user uses the electronic device, a capacitive proximity sensor may be arranged on the electronic device, and is configured to detect a contact status between the human body and the electronic device, to determine whether a SAR value absorbed by the human body exceeds a criteria. When the capacitive proximity sensor detects that the human body approaches the electronic device, the capacitive proximity sensor may trigger the electronic device to adjust a transmit power of a modem (modem), to reduce the impact of the electromagnetic radiation on the human body. Therefore, how to improve accuracy of detecting, by the capacitive proximity sensor, whether the human body approaches the electronic devices becomes an urgent problem to be solved.

**SUMMARY**

This application provides an adjustment method for a capacitive proximity sensor applied to a foldable device, and an electronic device, to reduce a probability that a human body proximity capacitance value is misdetermined when a user approaches the electronic device on the basis that an environmental capacitance value changes sharply because a metal medium of a screen B approaches an antenna connected to a capacitive proximity sensor of a screen A when a foldable screen of the electronic device is changed from a non-fully folded form to a fully folded form, and improve accuracy of detecting, by the capacitive proximity sensor, the human body proximity capacitance value on the foldable-screen electronic device.

According to a first aspect, this application provides an adjustment method for a capacitive proximity sensor applied to a foldable device. The method is applied to an electronic device having a foldable screen and a capacitive proximity sensor, and includes: detecting, by the electronic device, a capacitance value in a first time period through the capacitive proximity sensor if the foldable screen is changed from a non-fully folded form to a fully folded form; determining, by the electronic device, a first environmental capacitance value based on the capacitance value in the first time period; detecting, by the electronic device, a first capacitance value through the capacitive proximity sensor when the electronic device determines that the foldable screen is in the fully folded form; determining, by the electronic device, a first human body proximity capacitance value based on the first capacitance value and the first environmental capacitance value; and determining, by the electronic device, that a human body approaches the electronic device when the first human body proximity capacitance value is greater than a first preset threshold.

In a possible implementation, after the determining, by the electronic device, that a human body approaches the electronic device, the method further includes: triggering, by the electronic device, a modem to work at a specified transmit power, or turning on, by the electronic device, a display screen.

In a possible implementation, the determining, by the electronic device, a first environmental capacitance value based on the capacitance value in the first time period specifically includes: determining, by the electronic device, a minimum capacitance value lasting for a first preset duration in the first time period as the first environmental capacitance value.

In a possible implementation, the determining, by the electronic device, a first human body proximity capacitance value based on the first capacitance value and the first environmental capacitance value specifically includes: subtracting, by the electronic device, the first environmental capacitance value from the first capacitance value, to obtain the first human body proximity capacitance value.

In a possible implementation, before the detecting, by the electronic device, a capacitance value in a first time period through the capacitive proximity sensor if the foldable screen is changed from a non-fully folded form to a fully folded form, the method further includes: when the Hall sensor detects that the foldable screen is in a folded form, the capacitive proximity sensor detects that a minimum capacitance value lasting for a first preset duration in a current time period is greater than a second preset threshold, and the electronic device allows calibration of an environmental capacitance, determining, by the electronic device, that the foldable screen is changed from the non-fully folded form to the fully folded form.

In a possible implementation, the when the Hall sensor detects that the foldable screen is in a folded form, the capacitive proximity sensor detects that a minimum capacitance value lasting for a first preset duration in a current time period is greater than a second preset threshold, and the electronic device allows calibration of an environmental capacitance, determining, by the electronic device, that the foldable screen is changed from the non-fully folded form to the fully folded form specifically includes: when a state flag bit of the Hall sensor is a first value, the capacitive proximity sensor detects that the minimum capacitance value lasting for the first preset duration is greater than the second preset threshold, and a calibration flag bit of the capacitive proximity sensor is a second value, determining, by the electronic device, that the foldable screen is changed from the non-fully folded form to the fully folded form.

In a possible implementation, the method further includes: detecting, by the electronic device, a second capacitance value when the electronic device determines that the foldable screen is in the non-fully folded form; and determining, by the electronic device, a second human body proximity capacitance value based on the second capacitance value and the second environmental capacitance value, where the second environmental capacitance value is an environmental capacitance value determined by the electronic device when the electronic device is started when the foldable screen is in the non-fully folded form.

In a possible implementation, the detecting, by the electronic device, a second capacitance value when the electronic device determines that the foldable screen is in the non-fully folded form specifically includes: when the Hall sensor detects that the foldable screen is in a fully unfolded form, or when the Hall sensor detects that the foldable screen is in the folded form but the capacitive proximity sensor detects that the minimum capacitance value lasting for the first preset duration in the current time period is less than the second preset threshold, determining, by the electronic device, that the foldable screen is in the non-fully folded form; and detecting, by the electronic device, the second capacitance value.

In a possible implementation, the when the Hall sensor detects that the foldable screen is in a fully unfolded form, or when the Hall sensor detects that the foldable screen is in the folded form but the capacitive proximity sensor detects that the minimum capacitance value lasting for the first preset duration in the current time period is less than the second preset threshold, determining, by the electronic device, that the foldable screen is in the non-fully folded form specifically includes: when a state flag bit of the Hall sensor is a third value, or when the state flag bit of the Hall sensor is a first value but the capacitive proximity sensor detects that the minimum capacitance value lasting for the first preset duration is less than the second preset threshold, determining, by the electronic device, that the foldable screen is in the non-fully folded form.

According to a second aspect, an embodiment of this application provides an electronic device, including a capacitive proximity sensor, one or more processors, and one or more memories. The one or more memories and the capacitive proximity sensor are coupled to the one or more processors, the one or more memories are configured to store a computer-executable program, and when the one or more processors and the capacitive proximity sensor execute the computer-executable program, the electronic device is caused to perform the method according to any one of the possible implementations provided in the first aspect.

According to a third aspect, an embodiment of this application provides a chip system, including a processing circuit and an interface circuit, where the interface circuit is configured to receive code instructions and transmit the code instructions to the processing circuit, and the processing circuit is configured to run the code instructions to cause the chip system to perform the method according to any one of the possible implementations provided in the first aspect.

According to a fourth aspect, an embodiment of this application provides a computer-readable storage medium, wherein the computer-readable storage medium stores a computer-executable program, and when the computer-executable program is run on an electronic device, the electronic device is caused to perform the method according to any one of the possible implementations of the first aspect.

## BRIEF DESCRIPTION OF DRAWINGS

FIG. 1A is a diagram of an arrangement structure of a capacitive proximity sensor according to an embodiment of this application;
FIG. 1B is a diagram of a circuit structure when a capacitive proximity sensor detects a capacitance value according to an embodiment of this application;
FIG. 1C is a diagram of an implementation in which a capacitive proximity sensor is configured to detect a human body proximity capacitance according to an embodiment of this application;
FIG. 2A is a diagram of a foldable-screen electronic device having a capacitive proximity sensor according to an embodiment of this application;
FIG. 2B is another schematic diagram of a foldable-screen electronic device having a capacitive proximity sensor according to an embodiment of this application;
FIG. 3A is a diagram of a form of a foldable screen according to an embodiment of this application;
FIG. 3B is another schematic diagram of form of a foldable screen according to an embodiment of this application;

FIG. 3C is another schematic diagram of form of a foldable screen according to an embodiment of this application;

FIG. 4 is a schematic flowchart of an adjustment method for a capacitive proximity sensor applied to a foldable device according to an embodiment of this application;

FIG. 5A is a schematic flowchart of detecting a form of a foldable screen according to an embodiment of this application;

FIG. 5B is a diagram in which a Hall sensor performs detection according to an embodiment of this application;

FIG. 6 is a diagram of an apparatus structure of an electronic device according to an embodiment of this application; and

FIG. 7 is a diagram of a hardware structure of an electronic device according to an embodiment of this application.

## DESCRIPTION OF EMBODIMENTS

Terms used in the following embodiments of this application are merely intended to describe specific embodiments, but are not intended to limit this application. As used in this specification and the accompanying claims of this application, terms "one", "a", "the", "the foregoing", "such a", and "this" of singular expression forms are also intended to include plural forms, unless otherwise explicitly indicated in the context. It should be further understood that the term "and/or" used in this application means including any or all possible combinations of one or more of listed items. In embodiments of this application, the terms "first" and "second" are merely intended for a purpose of description, and shall not be understood as implying relative importance or implicitly indicating a quantity of indicated technical features. Therefore, a feature defined by "first" or "second" may explicitly or implicitly include one or more features. In the description of embodiments of this application, unless otherwise specified, the term "a plurality of" means two or more.

**First, the following describes a working principle of a capacitive proximity sensor in embodiments of this application.**

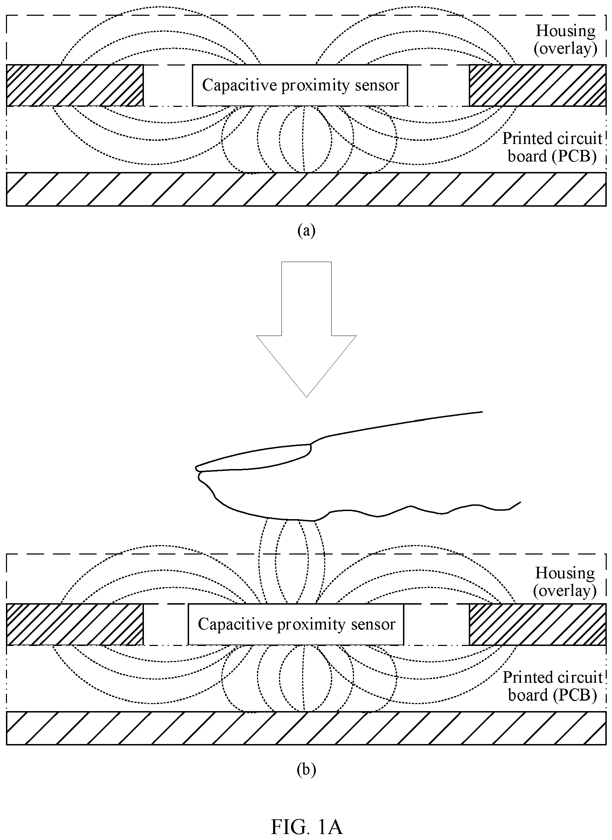

FIG. 1A shows an arrangement structure of a capacitive proximity sensor according to an embodiment of this application.

As shown in FIG. 1A, the capacitive proximity sensor in an electronic device may be arranged between a housing (overlay) and a printed circuit board (printed circuit board, PCB). The capacitive proximity sensor may detect capacitance values around the sensor. As shown in (a) in FIG. 1A, when a human body does not approach the electronic device, a capacitance value detected by the capacitive proximity sensor is equal to an environmental capacitance value. The environmental capacitance value is a capacitance value caused by a surrounding environment like a component and a layout around the capacitive proximity sensor, that is, $C_{SAR\ sensor}$ = $C_{Env}$. $C_{SAR\ sensor}$ is the capacitance value detected by the capacitive proximity sensor, and $C_{Env}$ is the environmental capacitance value. If the human body approaches the electronic device, as shown in (b) in FIG. 1A, the capacitance value detected by the capacitive proximity sensor in this case is a sum of a capacitance value triggered by the human body when the human body approaches the electronic device (which may also be referred to as a human body proximity capacitance value) and the environmental capacitance value, that is, $C_{SAR\ sensor}$ = $C_{Env}$ + $C_{User}$. $C_{User}$ is the human body proximity capacitance value, and $C_{User}$ may be simulated as a capacitance value of a parallel-plate capacitor, and may have the following calculation formula:

$$C_{User} = \varepsilon_0 \times \varepsilon_r \times S \div d$$

$\varepsilon_0$ is a spatial dielectric constant, $\varepsilon_r$ is a relative dielectric constant, $S$ is an overlapping area between the human body and the electronic device, and $d$ is a distance between the human body and the electronic device.

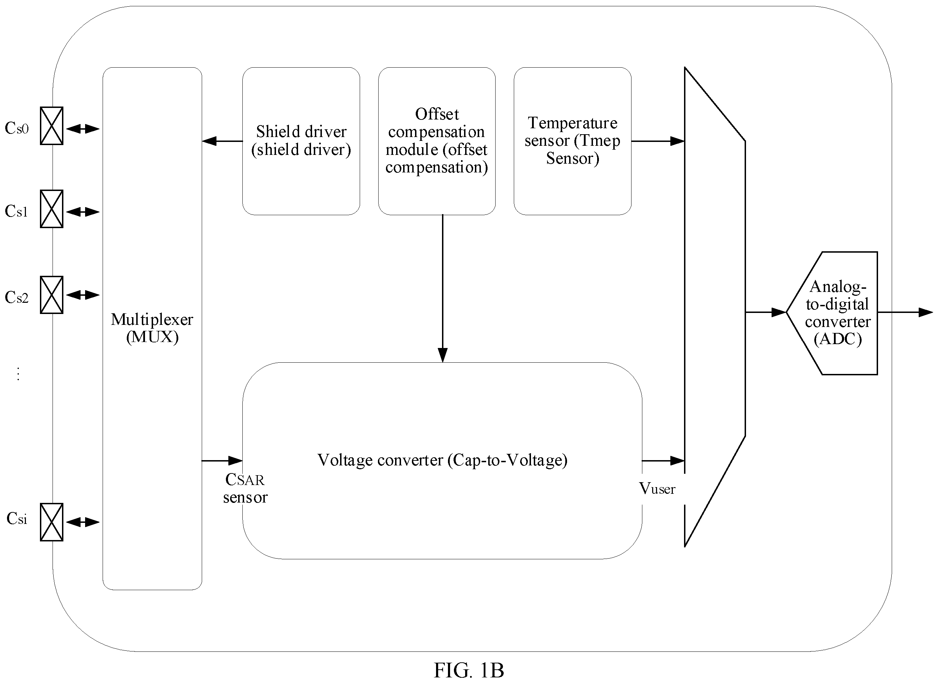

FIG. 1B shows a circuit structure when a capacitive proximity sensor detects a capacitance value according to an embodiment of this application.

As shown in FIG. 1B, the circuit structure may include a multiplexer (multiplexer, MUX), a shield driver (shield driver), an offset compensation module (offset compensation), a temperature sensor (Temperature Sensor), a voltage converter (Cap-to-Voltage), an analog-to-digital converter (analog-to-digital converter, ADC), and the like.

The shield driver may be configured to drive the MUX to work. An input of the MUX is capacitance values (for example, $C_{S0}$, $C_{S1}$, $C_{S2}$... $C_{Si}$ shown in FIG. 1B) at a plurality of detection points on the electronic device, and an output of the MUX is a capacitance value (for example, $C_{SAR\ sensor}$ shown in FIG. 1B) detected by the capacitive proximity sensor. The capacitance value detected by the capacitive proximity sensor may be a sum of an environmental capacitance value and a human body proximity capacitance value (when the human body does not approach the electronic device, the human body proximity capacitance value is 0). The capacitance value detected by the capacitive proximity sensor and outputted by the MUX and environmental offset data outputted by the offset compensation module may be used as an input of the voltage converter. The environmental offset data is for eliminating the environmental capacitance value, so that the human body proximity capacitance value is obtained from the capacitance value detected by the capacitive proximity sensor. The voltage converter may convert the human body proximity capacitance value to a corresponding voltage (for example, $V_{user}$ shown in FIG.

1B). The temperature sensor may be configured to provide a temperature compensation value, to ensure that data detected by the capacitive proximity sensor does not change with a temperature. The analog-to-digital converter may be configured to quantize the voltage corresponding to the human body proximity capacitance value, so that a subsequent digital processing unit (not shown in FIG. 1B) determines, based on a quantization result, whether the human body approaches the electronic device. In this embodiment of this application, to simplify a description process, whether the human body approaches the electronic device is directly determined based on a detected human body proximity capacitance value, and implementation details of converting the human body proximity capacitance value to the corresponding voltage and performing determining based on the voltage are not described.

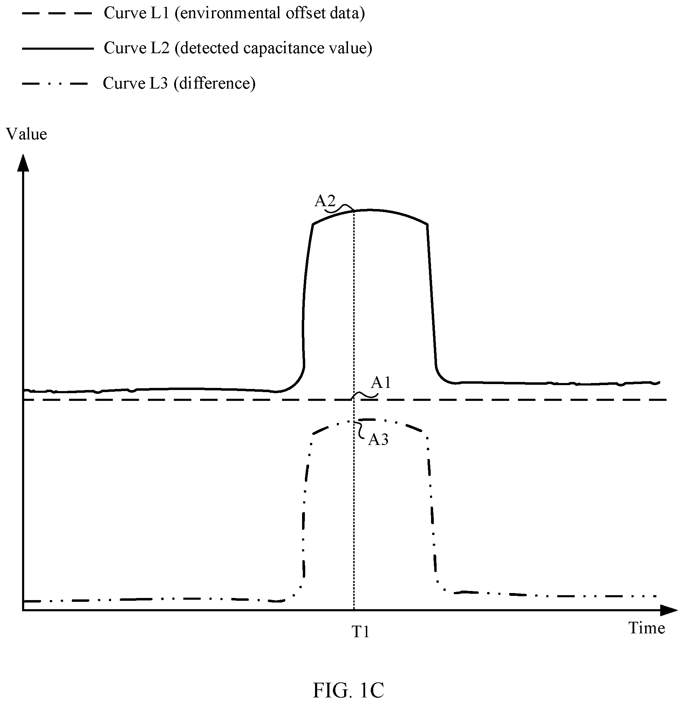

FIG. 1C shows an implementation in which a capacitive proximity sensor is configured to detect a human body proximity capacitance value according to an embodiment of this application.

The capacitance value detected by the capacitive proximity sensor is the sum of the environmental capacitance value and the human body proximity capacitance value. Therefore, to obtain the human body proximity capacitance value from the capacitance value detected by the capacitive proximity sensor, the environmental capacitance value needs to be eliminated from the capacitance value detected by the capacitive proximity sensor by using environmental offset data.

Specifically, after delivery of the electronic device, if a component and a layout in surrounding space of the capacitive proximity sensor are fixed and do not greatly change, when the human body does not approach the electronic device, the capacitance value (that is, the environmental capacitance value) detected by the capacitive proximity sensor is usually relatively stable, and a rapid change of the capacitance value is usually caused when the human body approaches the electronic device. Therefore, based on the feature, a specific implementation in which the electronic device determines the environmental offset data is as follows: When the electronic device is started, the capacitive proximity sensor may detect a capacitance change. When the capacitive proximity sensor detects a minimum capacitance value lasting for preset duration 1 in a current time period, the electronic device determines the minimum capacitance value as the environmental capacitance value, where a value of the environmental offset data is the same as the environmental capacitance value. In this way, the electronic device can avoid a case in which the human body proximity capacitance value is misdetermined as the environmental capacitance value when a user-handheld electronic device is started, thereby improving accuracy of detecting the environmental capacitance value by the electronic device.

After the electronic device determines the environmental offset data, a specific implementation in which the electronic device detects the human body proximity capacitance value is as follows: When the capacitive proximity sensor detects a capacitance value at a time point, the capacitive proximity sensor may subtract the environmental offset data from the capacitance value detected by the capacitive proximity sensor at the time point, to obtain a human body proximity capacitance value at the time point.

For example, as shown in FIG. 1C, a curve L1 may indicate the environmental offset data. A curve L2 is a curve showing that the capacitance value detected by the capacitive proximity sensor changes over time. A curve L3 is a curve showing that a difference obtained by subtracting the environmental offset data from the capacitance value detected by the capacitive proximity sensor changes over time. For example, a time point T1 is selected, a capacitance value detected by the capacitive proximity sensor at the moment T1 is A2, and the environmental offset data is A1. Therefore, a difference, that is, A2-A1=A3, is a value of the curve L3 at the moment T1, and A3 is a human body proximity capacitance value.

In this embodiment of this application, FIG. 1A to FIG. 1C are merely used as examples for describing this application, and do not constitute a limitation on this application.

When the capacitive proximity sensor detects the human body proximity capacitance value, the capacitive proximity sensor may determine whether the human body proximity capacitance value is greater than a preset threshold 1. If the human body proximity capacitance value is less than the preset threshold 1, the capacitive proximity sensor may determine that a user does not approach the electronic device. If the human body proximity capacitance value is greater than the preset threshold 1, the capacitive proximity sensor may determine that the user approaches the electronic device. Therefore, the capacitive proximity sensor may trigger the electronic device to adjust a transmit power of a modem (modem), so that a transmit power of the modem when the human body approaches the electronic device is less than a transmit power of the modem when the human body does not approach the electronic device, thereby reducing an impact of electromagnetic radiation on the human body.

However, if the electronic device is a foldable electronic device (which may be referred to as a foldable device for short), for example, a foldable device or an expandable device having a foldable screen, in comparison with an unfoldable/unexpandable device, one of significant differences of the foldable/expandable device in hardware is that relative spatial positions of components of the unfoldable/unexpandable device are fixed, but spatial layouts of components of the foldable/expandable device are variable. In other words, in a folding process or an expanding process, relative spatial positions of the components of the foldable/expandable device change, and after a folding/expanding operation is completed, there are different spatial position relationships between the components of the foldable/expandable device for different folding/expanding degrees. In this way, the component and the layout in the surrounding space of the capacitive proximity sensor change based on a folding degree or an expanding degree, resulting in a greater change of the environmental capacitance value.

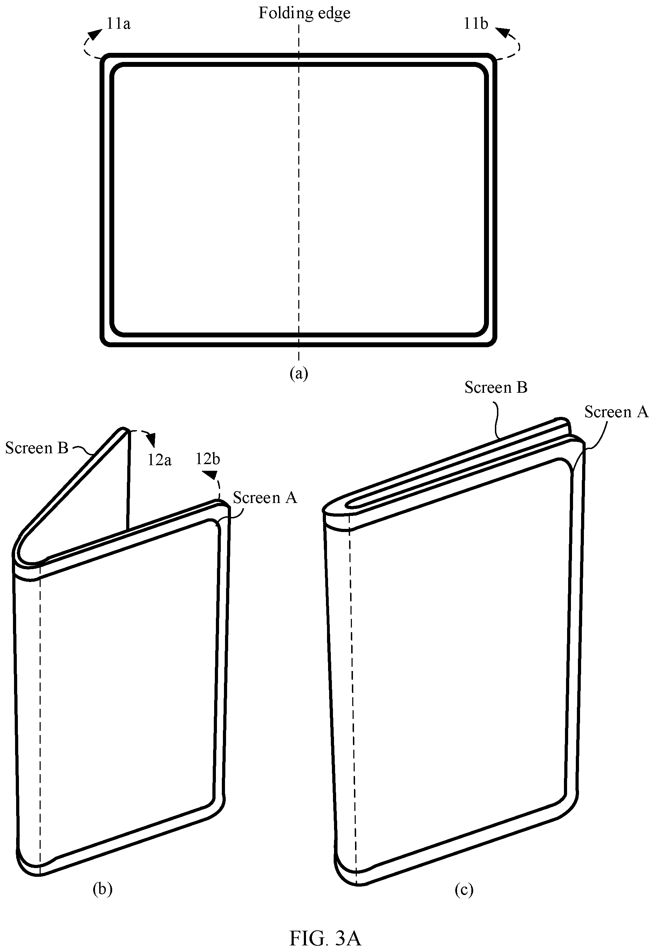

Embodiments of this application are described below by using an example in which the electronic device is the foldable device (which may be referred to as a foldable-screen electronic device). It should be noted that the electronic device may be a folded electronic device shown in subsequent embodiments in FIG. 3A to FIG. 3C. In some embodiments, the electronic device may alternatively be a foldable device like a tri-foldable electronic device or an expandable electronic device having a foldable screen. In other words, a specific folding form of the electronic device and a connection manner of a screen are not limited in this application.

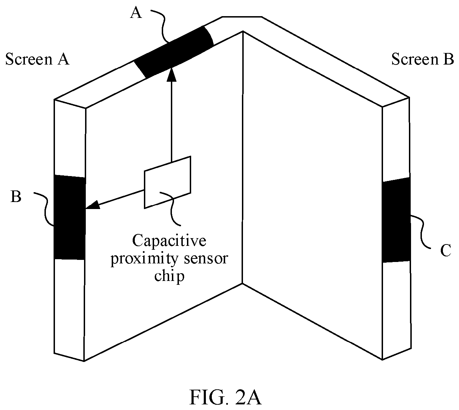

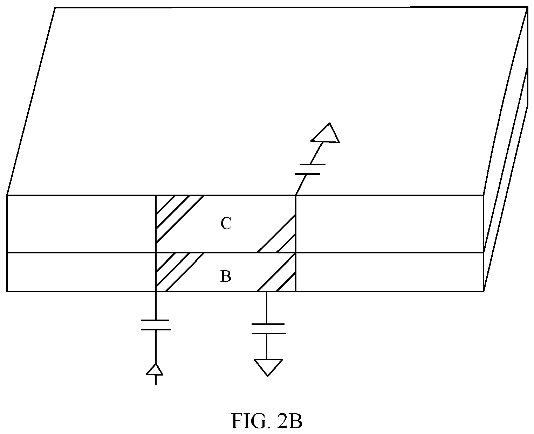

**FIG. 2A and FIG. 2B show a foldable-screen electronic device having a capacitive proximity sensor according to an embodiment of this application.**

As shown in FIG. 2A, for example, the capacitive proximity sensor may include a capacitive proximity sensor chip and an antenna connected to the chip. For example, the capacitive proximity sensor chip is arranged inside a screen A of the foldable-screen electronic device (which may be referred to as an electronic device for short in this embodiment of this application). Two antennas, that is, an antenna A and an antenna B, are arranged on the screen A of the foldable-screen electronic device. The capacitive proximity sensor chip may be connected to the antenna A and the antenna B through a circuit. The capacitive proximity sensor chip may determine whether a human body approaches the electronic device by detecting capacitance values of the antenna A and the antenna B. In other words, the capacitance values detected by the capacitive proximity sensor chip based on the antenna A and the antenna B are capacitance values detected by the capacitive proximity sensor. In addition, a metal medium C may be further arranged on a screen B of the electronic device.

When a user folds a foldable screen of the foldable-screen electronic device, and a form of the foldable-screen electronic device is changed from a non-fully folded form to a fully folded form, an environment around the capacitive proximity sensor has a greater change. Consequently, a difference between an environmental capacitance value of the electronic device in the non-fully folded form and a current actual environmental capacitance value is large. In other words, environmental offset data used by the electronic device in the non-fully folded form cannot be for effectively eliminating the current environmental capacitance value, so that a detected human body proximity capacitance value is greater than an actual human body proximity capacitance value. Therefore, in this case, when the capacitive proximity sensor triggers the electronic device to adjust transmission power of a modem, a distance between the human body and the electronic device is greater than a set distance (that is, a distance corresponding to a preset threshold 1); and when the human body does not approach the electronic device, the capacitive proximity sensor even still triggers the electronic device to reduce the transmit power of the modem, affecting communication efficiency of the electronic device.

As shown in FIG. 2B, a structure of the foldable-screen electronic device in FIG. 2A is used as an example. When the foldable-screen electronic device is folded, and the foldable-screen electronic device is changed from the non-fully folded form to the fully folded form, the metal medium C on the screen B approaches the antenna B of the screen A. The metal medium C causes a sensing capacitance value, where the sensing capacitance value is a part of the current environmental capacitance value. If the foldable-screen electronic device, in the non-fully folded form, uses the environmental offset data to eliminate the environmental capacitance value, the current environmental capacitance value cannot be effectively eliminated. As a result, a part that is of the environmental capacitance value and that is not eliminated is misdetermined as a human body proximity capacitance value, and a detected human body proximity capacitance value is greater than an actual human body proximity capacitance value. In this way, when the capacitive proximity sensor triggers the electronic device to adjust the transmit power of the modem, the distance between the human body and the electronic device is greater than the set distance (that is, a distance corresponding to a preset threshold); and when the human body does not approach the electronic device, the capacitive proximity sensor even still triggers the electronic device to adjust the transmit power of the modem, affecting the communication efficiency of the electronic device.

**Therefore, this application provides an adjustment method for a capacitive proximity sensor applied to a foldable device.** The method includes: An electronic device may detect a capacitance value through a capacitive proximity sensor. The capacitance value detected by the capacitive proximity sensor is a sum of a human body proximity capacitance value and an environmental capacitance value, and the human body proximity capacitance value is a capacitance value triggered when a human body approaches the electronic device. The electronic device may detect whether a foldable screen is changed from a non-fully folded form to a fully folded form. When the foldable screen is changed from the non-fully folded form to the fully folded form, the electronic device may adjust environmental offset data 1 to environmental offset data 2 based on a currently determined environmental capacitance value. The environmental offset data 1 is for eliminating an environmental capacitance value of a capacitance value detected by the capacitive proximity sensor when the foldable screen is not in the fully folded form, and the environmental offset data 2 is for eliminating an environmental capacitance value of a capacitance value detected by the capacitive proximity sensor when the foldable screen is in the fully folded form. When the foldable screen is in the fully folded form, and the electronic device detects, through the capacitive proximity sensor based on the environmental offset data 2, that the human body proximity capacitance value is greater than a preset threshold 1, the electronic device determines that the human body approaches the electronic device.

In this way, the adjustment method for a capacitive proximity sensor applied to a foldable device provided in this application is implemented, to reduce a probability that the human body proximity capacitance value is misdetermined when a user approaches the electronic device on the basis that an environmental capacitance value changes sharply because a metal medium of a screen B approaches an antenna connected to a capacitive proximity sensor of a screen A when the foldable screen of the electronic device is changed from the non-fully folded form to the fully folded form, and improve accuracy of detecting, by the capacitive proximity sensor, the human body proximity capacitance value on the foldable-screen electronic device.

**The following describes an electronic device having a foldable screen in embodiments of this application.**

The foldable screen of the electronic device may be folded to form at least two screens. For example, the foldable screen may be folded along a foldable edge or a folding axis to form a first screen and a second screen.

Foldable screens of electronic devices may be classified into two types according to folding manners. One type is with a foldable screen that is folded outward (which is briefly referred to as an outward foldable screen), and another type is with a foldable screen that is folded inward (which is briefly referred to as an inward foldable screen). An example in which the foldable screen may be folded to form the first screen and the second screen is used. After the outward foldable screen is folded, a display direction of the first screen and a display direction of the second screen face away from each other. After the inward foldable screen is folded, the display direction of the first screen and the display direction of the second screen face each other In this embodiment of this application, the first screen may be referred to as a screen A, and the second screen may be referred to as a screen B.

**For example, the following shows a form of the outward foldable screen provided in embodiments of this application:**

FIG. 3A is a diagram of a product form of an electronic device having an outward foldable screen according to an embodiment of this application. (a) in FIG. 3A is a diagram of a form when the outward foldable screen is fully unfolded. The outward foldable screen may be folded along a folding edge in a direction 11a and a direction 11b shown in (a) in FIG. 3A, to form a screen A (namely, the first screen) and a screen B (namely, the second screen), which jointly form a semi-folded form, shown in (b) in FIG. 3A. The outward foldable screen may be further folded along the folding edge according to a direction 12a and a direction 12b shown in (b) in FIG. 3A, to form an outward foldable screen in a fully folded form shown in (c) in FIG. 3A. As shown in (c) in FIG. 3A, after the foldable screen of the electronic device is fully folded, the screen A (that is, the first screen) faces away from the screen B (that is, the second screen), and the screen A and the screen B are visible to a user.

It may be understood that for the electronic device having the outward foldable screen, when the foldable screen is in the fully folded form or the semi-folded form, the electronic device may display interface content on the screen A (that is, the first screen) or the screen B (that is, the second screen). When the foldable screen is in the fully unfolded form, the electronic device may display the interface content on the screen A (that is, the first screen) and the screen B (that is, the first screen). For descriptions of the fully folded form, the semi-folded form, and the fully unfolded form of the foldable screen, refer to descriptions in the following embodiments. Details are not described herein.

**For example, the following shows a form of the inward foldable screen provided in embodiments of this application:**

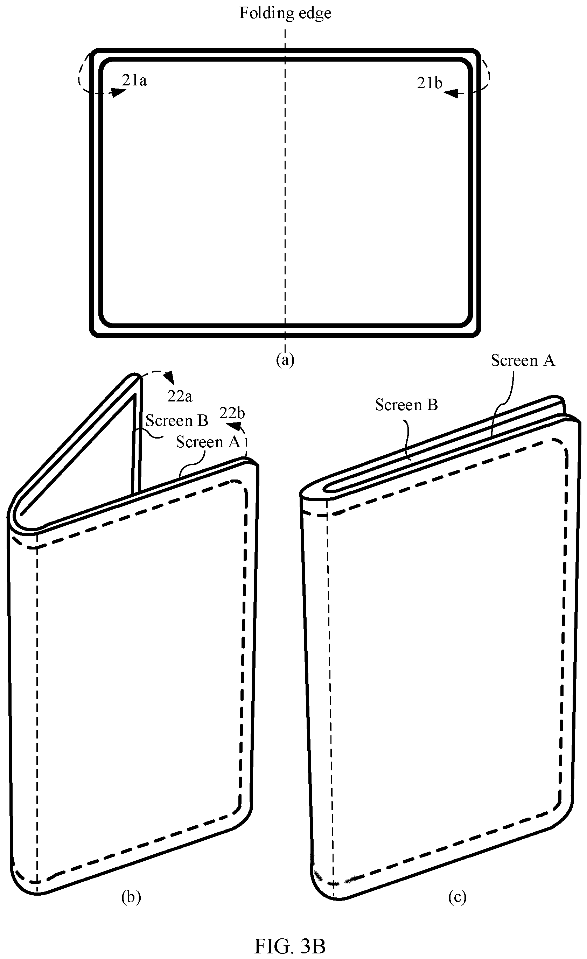

Refer to FIG. 3B. FIG. 3B is a diagram of a product form of an electronic device having an inward foldable screen according to an embodiment of this application. In FIG. 3B, (a) is a diagram of a form when the inward foldable screen is a fully unfolded form. The inward foldable screen may be folded along the folding edge in a direction 21a and a direction 21b shown in (a) in FIG. 3B, to form the screen A and the screen B that are in the semi-folded form shown in (b) in FIG. 3B. The inward foldable screen may be further folded along the folding edge according to a direction 22a and a direction 22b shown in (c) in FIG. 3B, to form an inward foldable screen in a fully folded form shown in (c) in FIG. 3B. As shown in (c) in FIG. 3B, after the foldable screen of the electronic device is fully folded, the screen A faces the screen B, and the screen A and screen B are invisible to the user.

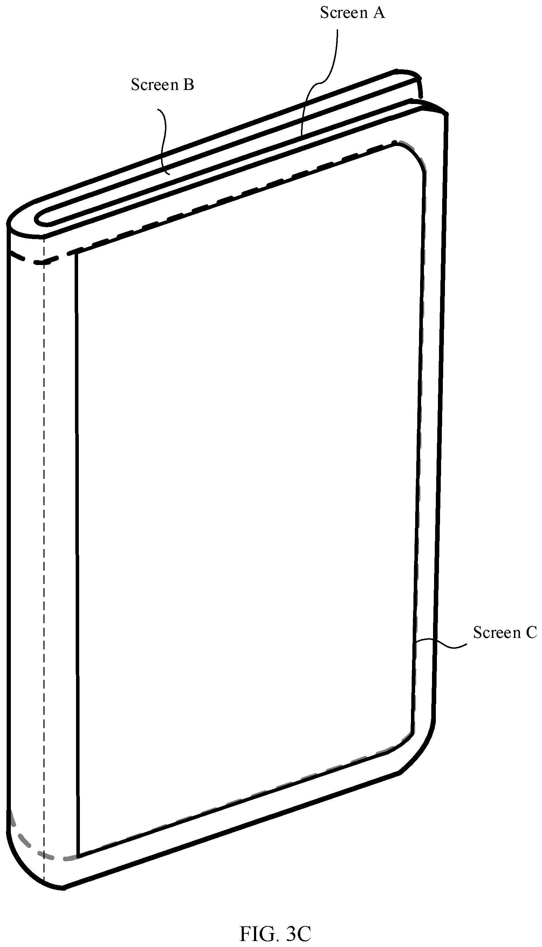

It should be noted that a display screen may be further arranged at a back surface of the first screen or the second screen of the inward foldable screen provided in this embodiment of this application, and the display screen may alternatively be referred to as a third screen. As shown in FIG. 3C, a screen C (that is, the third screen) may be arranged at a back surface of the screen A (that is, the first screen). After the inward foldable screen is fully folded, the screen A and the screen B face away from each other, and the screen C is visible to the user. It can be understood that for the electronic device having the inward foldable screen, when the foldable screen is in the fully folded form, an interface may be displayed on a third screen; when the foldable screen is in the semi-folded form, the interface may be displayed on the first screen, the second screen, and the third screen; and when the foldable screen is in the fully unfolded state, the interface may be displayed on the first screen and the second screen.

In this embodiment of this application, a value range of an included angle $\alpha$ between the A screen and the B screen of the foldable screen (including the inward foldable screen and the outward foldable screen) of the electronic device is [0°, 180°]. If $\alpha \in$ [0°, P1], the electronic device may determine that the foldable screen is in the fully folded form; if $\alpha \in$ [P1, P2], the electronic device may determine that the foldable screen is in the semi-folded form; and if $\alpha \in$ [P2, 180°], the electronic device may determine that the foldable screen is in the fully unfolded form. 0°<P1<P2<180°. P1 and P2 may be preset angle thresholds. P1 and P2 may be determined according to using habits of a large number of users for using the foldable screen; or P1 and P2 can be set in the electronic device by the user.

In some embodiments, according to using habits of most users, when the included angle $\alpha$ between the first screen and the second screen is greater than 150°, it is highly possible that the user wants to use the first screen and the second screen as a whole (that is, as a complete display screen). When the included angle $\alpha$ between the screen A and the screen B is less than 30°, the possibility that the user wants to use the screen A or the screen B alone is high, and the foldable screen may be in the fully folded form. Therefore, in this embodiment of this application, a value range of the preset angle threshold P1 may be (0, 30°), and a value range of the preset angle threshold P2 may be (150°, 180°). For example, the preset angle threshold P1 may be 5°, 10°, 15°, or 20°. For example, the preset angle threshold P2 may be 155°, 160°, 165°, or 170°. A specific implementation of the electronic device detecting an included angle between the screen A and the screen B is described in detail in the subsequent embodiments. Details are not described herein again.

The at least two screens formed after the foldable screen (including the inward foldable screen and the outward foldable screen) in this embodiment of this application is folded may be a plurality of screens that exist independently or may be a complete screen of an integrated structure folded into at least two parts.

For example, the foldable screen may be a flexible foldable screen, and the flexible foldable screen includes a folding edge made of a flexible material. The flexible foldable screen is partially or entirely made of a flexible material. The at least two screens formed after the flexible foldable screen is folded are the complete screen of an integrated structure folded into at least two parts.

For another example, the foregoing foldable screen may be a multi-screen foldable screen. The multi-screen foldable screen may include a plurality of (two or more) screens. The plurality of screens may be a plurality of separate display screens. The plurality of screens may be sequentially connected through a folding axis. Each screen is rotatable around the folding axis connected, to fold the multi-screen foldable screen.

FIG. 3A, FIG. 3B, and FIG. 3C show an example in which the foldable screen is the flexible foldable screen, to describe the foldable screen in this embodiment of this application. In addition, in the subsequent embodiments of this application, the foldable screen being the flexible foldable screen is also used as an example to describe the method provided in embodiments of this application.

For example, the electronic device in embodiments of this application may be a device including the foregoing foldable screen, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (Augmented reality, AR)\virtual reality (virtual reality, VR) device. A specific type of the electronic device is not particularly limited in embodiments of this application.

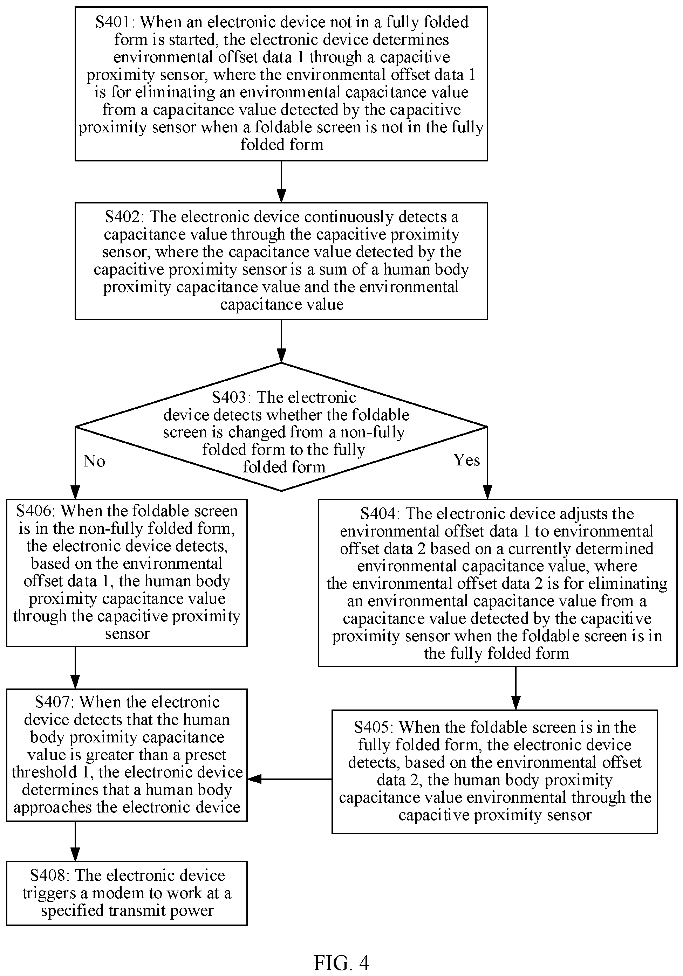

**FIG. 4 shows a process of an adjustment method for a capacitive proximity sensor applied to a foldable device according to an embodiment of this application.**

As shown in FIG. 4, a specific procedure of the method may include the following steps:

**S401: When an electronic device not in a fully folded form is started, the electronic device may determine environmental offset data 1 through a capacitive proximity sensor, where the environmental offset data 1 is for eliminating an environmental capacitance value from a capacitance value detected by the capacitive proximity sensor when a foldable screen is not in the fully folded form.**

Specifically, when the electronic device not in the fully folded form is started, the capacitive proximity sensor may be in a calibration state. In this case, the capacitive proximity sensor may detect a capacitance change. When the capacitive proximity sensor detects that a minimum capacitance value lasting for preset duration 1 in a current time period is a value 1, the electronic device determines the value 1 as a current environmental capacitance value. Therefore, the electronic device may determine a value of the environmental offset data 1 as the value 1. In this way, the electronic device can avoid a case in which a human body proximity capacitance value is misdetermined as the environmental capacitance value when a user-handheld electronic device is started, thereby improving accuracy of detecting the environmental capacitance value by the electronic device.

In this embodiment of this application, the electronic device determines that the foldable screen is not in the fully folded form when the electronic device detects that the following conditions are met: The electronic device detects that a state flag bit of a Hall sensor is 0, or detects that the state flag bit of the Hall sensor is 1 but the minimum capacitance value that lasts for the preset duration 1 in the current time period and that is detected by the capacitive proximity sensor is less than a preset threshold 2 (which may also be referred to as a second preset threshold).

The state flag bit of the Hall sensor may indicate whether the Hall sensor detects that the foldable screen is in a folded form. The folded form may include a semi-folded form and the fully folded form. The semi-folded form is that an included angle of the foldable screen is between a first angle and a second angle. The fully folded form is that the included angle of the foldable screen is between the second angle and a third angle. The third angle (for example, 0°) is less than the second angle (for example, 30°), and the second angle (for example, 30°) is less than the first angle (for example, 150°). Specific values of the first angle, the second angle, and the third angle are not limited in this application.

**S402: The electronic device continuously detects a capacitance value through the capacitive proximity sensor, where the capacitance value detected by the capacitive proximity sensor is a sum of the human body proximity capacitance value and the environmental capacitance value.**

In this embodiment of this application, when the capacitive proximity sensor is in a normal working state rather than the calibration state, the capacitive proximity sensor may eliminate, based on environmental offset data (for example, the environmental offset data 1 or subsequent environmental offset data 2), the environmental capacitance value from the capacitance value detected by the capacitive proximity sensor, to obtain the human body proximity capacitance value. The electronic device may determine whether a human body approaches the electronic device based on whether the human body proximity capacitance value is greater than a preset threshold 1.

**S403: The electronic device detects whether the foldable screen is changed from a non-fully folded form to the fully folded form.**

Specifically, when a user folds the foldable screen of the electronic device, and a form of the foldable screen is changed from the non-fully folded form to the fully folded form, an environment around the capacitive proximity sensor has a greater change. Consequently, a difference between an environmental capacitance value determined by the electronic device in the non-fully folded form and a current actual environmental capacitance value is large. In other words, the environmental offset data 1 used by the electronic device cannot be for effectively eliminating the current environmental capacitance value. Therefore, a part that is of the current environmental capacitance value and that is not eliminated is misdetermined as the human body proximity capacitance value, so that a human body proximity capacitance value detected by the electronic device is greater than an actual human body proximity capacitance value.

Therefore, when the electronic device detects that the foldable screen is changed from the non-fully folded form to the fully folded form, the electronic device needs to adjust the environmental offset data 1, so that adjusted environmental offset data can be for effectively eliminating an environmental capacitance value from a capacitance value detected by the capacitive proximity sensor when the foldable screen is in the fully folded form, to obtain an accurate human body proximity capacitance value when the user approaches the electronic device when the foldable screen is in the fully folded form.

A specific manner in which the electronic device detects whether the foldable screen is changed from the non-fully folded form to the fully folded form is described in detail in subsequent embodiments.

**S404: When the foldable screen is changed from the non-fully folded form to the fully folded form, the electronic device adjusts the environmental offset data 1 to the environmental offset data 2 based on a currently determined environmental capacitance value, where the environmental offset data 2 is for eliminating the environmental capacitance value from the capacitance value detected by the capacitive proximity sensor when the foldable screen is in a full foldable screen form.**

In this embodiment of this application, when the foldable screen is changed from the non-fully folded form to the fully folded form, the capacitive proximity sensor may be in the calibration state. The capacitive proximity sensor may detect that the minimum capacitance value lasting for the preset duration 1 in the current time period is a value 2, and determine the value 2 as the current environmental capacitance value. Therefore, the electronic device may determine the environmental offset data 2 as the value 2. In this way, the electronic device can avoid a case in which the human body proximity capacitance value is misdetermined as the environmental capacitance value when the user-handheld electronic device is started, thereby improving the accuracy of detecting the environmental capacitance value by the electronic device.

For example, the "current time period" described in the step may be a first time period closest to when it is detected that the foldable screen is changed from the non-fully folded form to the fully folded form. Therefore, when the foldable screen is changed from the non-fully folded form to the fully folded form, the electronic device may detect a capacitance value in the first time period. Then, when the electronic device determines that a minimum capacitance value lasting for the preset duration 1 (which may be referred to as the first preset duration) in the first time period is the value 2, the electronic device determines the value 2 as the environmental capacitance value (which may be referred to as a first environmental capacitance value), where a value of the environmental offset data 2 is the same as the first environmental capacitance value.

**S405: When the foldable screen is in the fully**

**folded form, the electronic device detects, based on the environmental offset data 2, the human body proximity capacitance value through the capacitive proximity sensor.**

Specifically, when the foldable screen is in the fully folded form, and the capacitive proximity sensor is in the normal working state rather than the calibration state, the electronic device may eliminate, based on the environmental offset data 2, the environmental capacitance value in the capacitance value detected by the capacitive proximity sensor, to obtain the human body proximity capacitance value. The electronic device may determine whether the human body approaches the electronic device based on whether the human body proximity capacitance value is greater than the preset threshold 1.

For example, when the foldable screen is in the fully folded form, the capacitive proximity sensor detects a capacitance value of 1000 (which may be referred to as a first capacitance value). If the environmental offset data 2 is 350, the human body proximity capacitance value detected by the capacitive proximity sensor=capacitance value detected by the capacitive proximity sensor-environmental offset data 2. Therefore, the human body proximity capacitance value is that 1000-350=650 (which may be referred to as a first human body proximity capacitance value). Capacitance value detected by the capacitive proximity sensor-environmental offset data 2 means that the electronic device eliminates, based on the environmental offset data 2, the environmental capacitance value from the capacitance value detected by the capacitive proximity sensor.

**S406: When the foldable screen is in the non-fully folded form, the electronic device detects, based on the environmental offset data 1, the human body proximity capacitance value through the capacitive proximity sensor.**

Specifically, when the foldable screen is not in the fully folded form, the capacitive proximity sensor may eliminate, based on the environmental offset data 1, the environmental capacitance value from the capacitance value detected by the capacitive proximity sensor, to obtain the human body proximity capacitance value. The electronic device may determine whether the human body approaches the electronic device based on whether the human body proximity capacitance value is greater than the preset threshold 1.

For example, when the foldable screen is not in the fully folded form, the capacitive proximity sensor detects a capacitance value of 1000 (which may be referred to as a second capacitance value). If the environmental offset data 1 is 250, the human body proximity capacitance value detected by the capacitive proximity sensor=capacitance value detected by the capacitive proximity sensor-environmental offset data 1. Therefore, the human body proximity capacitance value is that 1000-250=750 (which may be referred to as a second human body proximity capacitance value). The value of the environmental offset data 1 is an environmental capacitance value (which may be referred to as the second environmental capacitance value) when the foldable screen is in the non-fully folded form. Capacitance value detected by the capacitive proximity sensor-environmental offset data 1 means that the electronic device eliminates, based on the environmental offset data 1, the environmental capacitance value from the capacitance value detected by the capacitive proximity sensor.

**S407: When the electronic device detects that the human body proximity capacitance value is greater than the preset threshold 1, the electronic device determines that the human body approaches the electronic device.**

A value of the preset threshold 1 (which may also be referred to as a first preset threshold) may be 5000, 7000, or the like. In other words, a specific value of the preset threshold 1 is not limited in this application.

**S408: The electronic device triggers a modem to work at a specified transmit power.**

In this embodiment of this application, when the electronic device determines that the human body approaches the electronic device, the electronic device may trigger the modem to work at the specified transmit power, so that a transmit power of the modem when the human body approaches the electronic device is less than a transmit power of the modem when the human body does not approach the electronic device, thereby reducing an impact of electromagnetic radiation on the user when using the electronic device, and ensuring human body health.

In some embodiments, when the electronic device determines that the human body approaches the electronic device, the electronic device may turn on a display screen.

**Further, the steps shown in FIG. 4 in embodiments of this application are described in detail.**

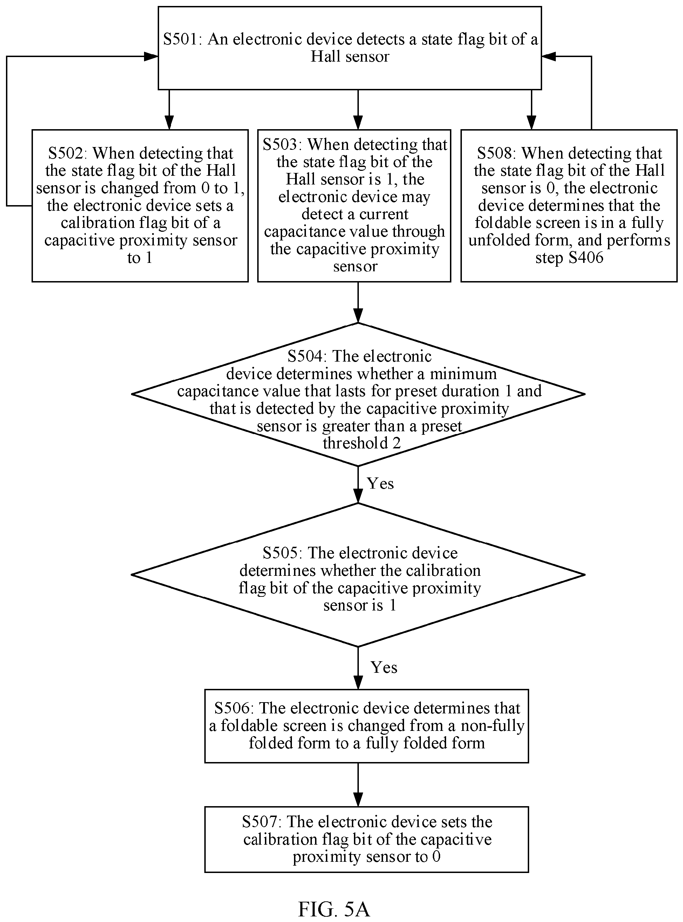

As shown in FIG. 5A, a specific process of step S403 may include the following steps:

**S501: An electronic device detects a state flag bit of a Hall sensor.**

The state flag bit of the Hall sensor may indicate whether the Hall sensor detects that a foldable screen is in a folded form. The folded form may include a semi-folded form and a fully folded form. The semi-folded form is that an included angle of the foldable screen is between a first angle and a second angle. The fully folded form is that the included angle of the foldable screen is between the second angle and a third angle. The third angle is less than the second angle, and the second angle is less than the first angle.

**S502: When detecting that the state flag bit of the Hall sensor is changed from 0 to 1, the electronic device sets a calibration flag bit of a capacitive proximity sensor to 1.**

The calibration flag bit of the capacitive proximity sensor indicates whether the electronic device allows calibration of an environmental capacitance value, to adjust environmental offset data. The calibration flag bit of the capacitive proximity sensor is 0 by default.

In this embodiment of this application, when the state flag bit of the Hall sensor is changed from 0 to 1, it indicates that the foldable screen is changed from the non-fully folded form to the folded form (including the semi-folded form and the fully folded form). In other words, the Hall sensor detects whether the foldable screen is in the folded form, to determine whether the foldable screen is in the fully folded form. Subsequently, the electronic device further needs to determine whether a minimum capacitance value that lasts for preset duration 1 in a current time period and that is detected by the capacitive proximity sensor is greater than a preset threshold 2.

In some embodiments, when the electronic device detects that the state flag bit of the Hall sensor is 0, the electronic device may set the calibration flag bit of the capacitive proximity sensor to 1.

**S503: When detecting that the state flag bit of the Hall sensor is 1, the electronic device may detect a current capacitance value through the capacitive proximity sensor.**

The state flag bit of the Hall sensor is 1, to indicate that the Hall sensor detects that the foldable screen is in the folded form.

**S504: The electronic device determines whether the minimum capacitance value that lasts for the preset duration 1 in the current time period and that is detected by the capacitive proximity sensor is greater than the preset threshold 2.**

The minimum capacitance value lasting for the preset duration 1 in the current time period may be represented as a current environmental capacitance value. When the state flag bit of the Hall sensor is 1, and the minimum capacitance value lasting for the preset duration 1 in the current time period is greater than the preset threshold 2, it indicates that a distance between a display screen (for example, the screen B shown in FIG. 3A) on which the capacitive proximity sensor is not arranged and a display screen (for example, the screen A shown in FIG. 3A) on which the capacitive proximity sensor is arranged is less than a preset distance threshold. In other words, when the state flag bit of the Hall sensor is 1, and the minimum capacitance value lasting for the preset duration 1 is greater than the preset threshold 2, the foldable screen is in the fully folded form.

In some embodiments, in the step, the electronic device may further determine whether a difference between the minimum capacitance value that lasts for the preset duration 1 in the current time period and that is detected by the capacitive proximity sensor and environmental offset data 1 is greater than a preset threshold 3. If the difference between the minimum capacitance value that lasts for the preset duration 1 in the current time period and that is detected by the capacitive proximity sensor and the environmental offset data 1 is greater than the preset threshold 3, and the state flag bit of the Hall sensor is 1, the foldable screen is in the fully folded form. If the difference between the minimum capacitance value that lasts for the preset duration 1 in the current time period and that is detected by the capacitive proximity sensor and the environmental offset data 1 is not greater than the preset threshold 3, and the state flag bit of the Hall sensor is 1, the foldable screen is not in the fully folded form but is in the semi-folded form. It may be understood that the difference between the minimum capacitance value that lasts for the preset duration 1 in the current time period and that is detected by the capacitive proximity sensor and the environmental offset data 1 is caused when the display screen on which the capacitive proximity sensor is not arranged approaches the display screen on which the capacitive proximity sensor is arranged. Therefore, the difference may more directly represent a distance between the screen A and the screen B.

In this embodiment of this application, the preset threshold 2 may be obtained through testing before delivery of the electronic device. Specifically, before the delivery, the electronic device may measure an environmental capacitance value corresponding to a maximum included angle (for example, the foregoing second angle) between the screen A and the screen B when the foldable screen is in the fully folded form, and then determine the preset threshold 2 based on the environmental capacitance value. For example, the preset threshold 2 may be equal to the environmental capacitance value, or the preset threshold 2 may be equal to the environmental capacitance value plus an error threshold. The preset threshold 3 may be determined based on the preset threshold 2. For example, the preset threshold 3 may be equal to the preset threshold 2 minus the environmental offset data 1, or the preset threshold 3 may be equal to the preset threshold 2 minus the environmental offset data 1 plus the error threshold. It may be understood that because a component of each electronic device has an error in material and layout, a preset threshold 2 corresponding to each electronic device is also different.

**S505: When determining that the minimum capacitance value lasting for the preset duration 1 in the current time period is greater than the preset threshold 2, the electronic device determines whether the calibration flag bit of the capacitive proximity sensor is 1.**

The calibration flag bit of the capacitive proximity sensor is 1, to indicate that the electronic device allows the calibration of the environmental capacitance value, to adjust the environmental offset data based on a calibrated environmental capacitance value.

**S506: When determining that the calibration flag bit of the capacitive proximity sensor is 1, the electronic device determines that the foldable screen is changed from the non-fully folded form to the fully folded form, and performs step S404.**

Specifically, when the state flag bit of the Hall sensor is 1, the minimum capacitance value that lasts for the preset duration 1 in the current time period and that is detected by the capacitive proximity sensor is greater than the preset threshold 2, and the calibration flag bit of the capacitive proximity sensor is 1, the electronic device determines that the foldable screen is changed from the non-fully folded form to the fully folded form, and the capacitive proximity sensor may be in a calibration state. In this case, the electronic device performs S404: Calibrate the environmental capacitance value through the capacitive proximity sensor, and adjust the environmental offset data 1 to the environmental offset data 2 based on the calibrated environmental capacitance value.

**S507: The electronic device sets the calibration flag bit of the capacitive proximity sensor to 0.**

In this embodiment of this application, before performing S404 or after performing S404, the electronic device may set the calibration flag bit of the capacitive proximity sensor from 1 to 0. This is not limited in this application. When the calibration flag bit of the capacitive proximity sensor is 0, it indicates that the electronic device does not allow the calibration of the environmental capacitance value.

**S508: When detecting that the state flag bit of the Hall sensor is 0, the electronic device determines that the foldable screen is in the fully unfolded form, and performs step S406.**

In some possible implementations, when the state flag bit of the Hall sensor is 1, and the minimum capacitance value that lasts for the preset duration 1 in the current time period and that is detected by the capacitive proximity sensor is less than the preset threshold 2, the electronic device may determine that a form of the foldable screen is a semi-folded form rather than a fully folded form. Therefore, the electronic device may perform S406.

In some possible implementations, when the state flag bit of the Hall sensor is 1, the minimum capacitance value that lasts for the preset duration 1 and that is detected by the capacitive proximity sensor is greater than the preset threshold 2, and the calibration flag bit of the capacitive proximity sensor is 0, the electronic device determines that the foldable screen is currently in the fully folded form, and the capacitive proximity sensor is in the normal working state. In this case, the electronic device performs S405.

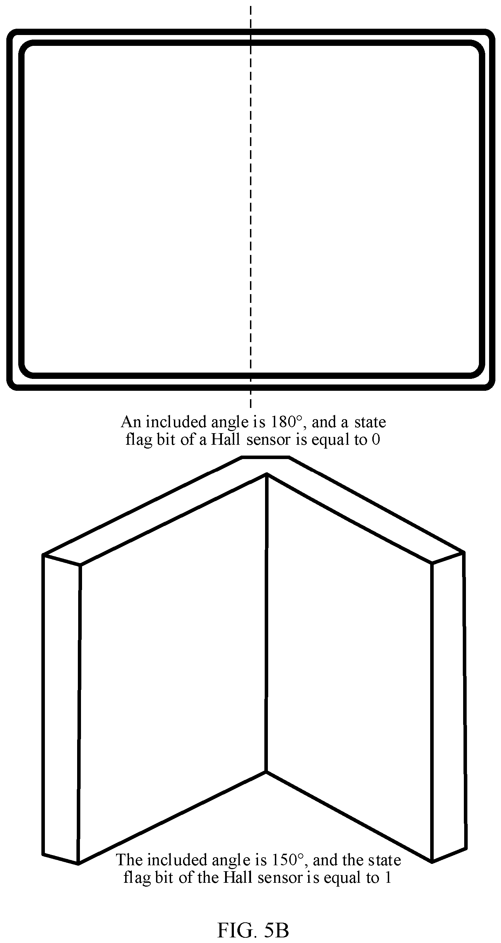

During implementation of the procedure shown in FIG. 5A, the form of the foldable screen is recognized based on the capacitive proximity sensor and the Hall sensor, to resolve a problem of low accuracy in recognizing the form of the foldable screen based on the Hall sensor alone. As shown in FIG. 5B, the state flag bit that is of the Hall sensor and that indicates the form of the foldable screen has only two values. When the foldable screen is in the fully unfolded form (an included angle of the foldable screen in an example in FIG. 5B is 180°), the state flag bit of the Hall sensor is 0; but when the included angle of the foldable screen is less than or equal to the first angle (an included angle formed by the foldable screen in an example in FIG. 5B is 150°), the state flag bit of the Hall sensor is 1. In other words, based on the Hall sensor alone, whether the foldable screen is in the folded form or the fully unfolded form may be determined, but whether the foldable screen is in the fully folded form cannot be accurately determined. However, during implementation of the procedure shown in FIG. 5A, based on the capacitive proximity sensor and the Hall sensor, it may be accurately determined that the foldable screen is in the fully unfolded form, the semi-folded form, or the fully folded form.

It may be understood that a specific value of the state flag bit of the Hall sensor and a specific value of the calibration flag bit of the capacitive proximity sensor are not limited in this embodiment of this application. In other words, in addition to 0/1 representing a corresponding meaning, another value may alternatively represent the corresponding meaning. When the state flag bit of the Hall sensor is a first value, it indicates that the Hall sensor detects that the foldable screen is in the folded form. When the state flag bit of the Hall sensor is a third value, it indicates that the Hall sensor detects that the foldable screen is in the fully unfolded form. When the calibration flag bit of the capacitive proximity sensor is a second value, it represents that the electronic device allows the calibration of the environmental capacitance.

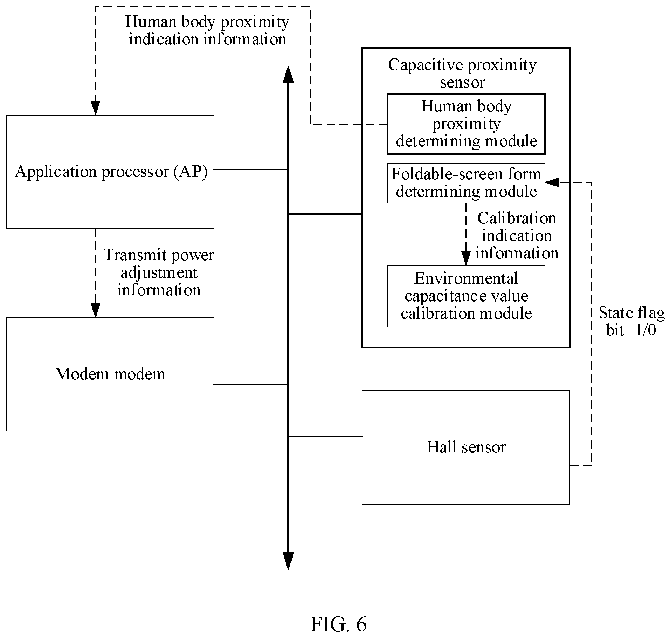

**FIG. 6 shows an apparatus structure of an electronic device according to an embodiment of this application.**

As shown in FIG. 6, the apparatus structure of the electronic device may include: a Hall sensor, a capacitive proximity sensor, an application processor AP, and a modem modem. The capacitive proximity sensor may include a foldable-screen form determining module, an environmental capacitance value calibration module, and a human body proximity determining module, where the Hall sensor may be configured to detect whether a foldable screen is in a folded form. When detecting that the foldable screen is in the fully unfolded form, the Hall sensor may send the state flag bit = 0 to the foldable-screen form determining module of the capacitive proximity sensor. When detecting that the foldable screen is in the folded form, the Hall sensor may send the state flag bit = 1 to the foldable-screen form determining module in the capacitive proximity sensor.

The capacitive proximity sensor may be configured to detect a capacitance value, calibrate an environmental capacitance value to adjust environmental offset data, determine a human body proximity capacitance value based on a detected capacitance value, determine whether the human proximity capacitance value is greater than a preset threshold 1, and the like. As shown in FIG. 6, the foldable-screen form determining module in the capacitive proximity sensor may receive a value of the state flag bit sent by the Hall sensor, and determine the form of the foldable screen based on the value of the state flag bit of the Hall sensor, for example, determine that the foldable screen is in a non-fully folded form/a fully folded form, or determine that the foldable screen is changed from the non-fully folded form to the fully folded form. Then, when determining that the foldable screen is changed from the non-fully folded form to the fully folded form, the foldable-screen form determining module may send calibration indication information to the environmental capacitance value calibration module, to trigger the environmental capacitance value calibration module to calibrate the environmental capacitance value, and adjust the environmental offset data according to a calibrated environmental capacitance value. The human body proximity determining module may be configured to determine whether the human body proximity capacitance value is greater than the preset threshold 1. If the human body proximity capacitance value is greater than the preset threshold 1, the human body proximity determining module sends the human body proximity indication information to the application processor AP. The human body proximity indication information is used to indicate that a human body approaches the electronic device. For a specific implementation, refer to the foregoing embodiment.

After receiving the human body proximity indication information, the application processor AP may perform a corresponding operation. For example, as shown in FIG. 6, the AP may send transmit power adjustment information to a modem modem, to trigger the modem to work at a specified transmit power. The specified transmit power is less than transmit power when the human body does not approach the electronic device.

FIG. 6 is merely used as an example for describing this application and does not constitute a limitation on this application.

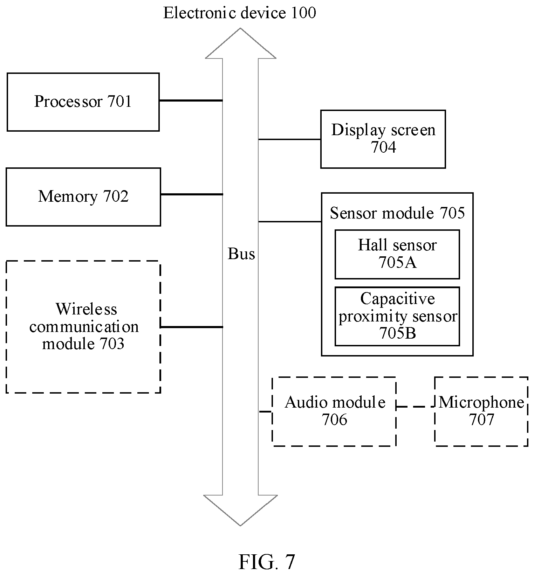

FIG. 7 **shows a hardware structure of an electronic device 100 according to an embodiment of this application.**

In this embodiment of this application, the electronic device 100 is the electronic device described in the foregoing embodiments.

As shown in FIG. 7, the electronic device 100 may include a processor 701, a memory 702, a wireless communication module 703 (optional), a display screen 704, a sensor module 705, an audio module 706 (optional), and a microphone 707 (optional).

It may be understood that the structure illustrated in this embodiment of this application constitutes no specific limitation on the electronic device 100. In some other embodiments of this application, the electronic device 100 may include more or fewer components than the components shown in FIG. 7, or combine some components, or split some components, or have different component arrangements. The components shown in FIG. 7 may be implemented by hardware, software, or a combination of the software and the hardware.

The processor 701 may include one or more processing units. For example, the processor 701 may include an application processor (application processor, AP), a modem, a graphics processing unit (graphics processing unit, GPU), an image signal processor (image signal processor, ISP), a controller, a video encoder and a video decoder, a digital signal processor (digital signal processor, DSP), a baseband processor, a neural-network processing unit (neural-network processing unit, NPU), and/or the like. Different processing units may be independent devices, or may be integrated into one or more processors. The controller may generate an operation control signal based on instruction operation code and a timing signal, to complete control of instruction fetching and instruction execution.

The processor 701 may be further arranged with a memory. The memory is configured to store instructions and data. In some embodiments, the storage of the processor 701 is a cache memory. The memory may store instructions or data that is just used or is cyclically used by the processor 701. If the processor 701 needs to use the instructions or the data again, the processor may directly invoke the instructions or the data from the memory. This avoids repeated access, and reduces waiting time of the processor 701, thereby improving system efficiency.

In some embodiments, the processor 701 may include one or more interfaces. The interface may be an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, and/or the like.

The memory 702 is coupled to the processor 701, and is configured to store various software programs and/or a plurality of groups of instructions. In a specific implementation, the memory 702 may include a volatile memory (volatile memory) such as a random access memory (random access memory, RAM); the memory may further include a non-volatile memory (non-volatile memory), such as a ROM, a flash memory (flash memory), a hard disk drive (Hard Disk Drive, HDD), or a solid state drive (Solid State Drives, SSD); and the memory 702 may further include a combination of the foregoing types of memories. The memory 702 may further store some program code, so that the processor 701 can easily invoke the program code stored in the memory 702, to implement an implementation method of embodiments of this application in the electronic device 100. The memory 702 may store an operating system, for example, an embedded operating system such as uCOS, VxWorks, or RTLinux.

The wireless communication module 703 may provide a solution to wireless communication applied to the electronic device 100 and including wireless local area networks (wireless local area networks, WLAN) (such as wireless fidelity (wireless fidelity, Wi-Fi)), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 703 may be one or more components integrated with at least one communication processing module. The wireless communication module 703 receives an electromagnetic wave via an antenna, performs frequency modulation and filtering on an electromagnetic wave signal, and sends a processed signal to the processor 701. The wireless communication module 703 may further receive a to-be-sent signal from the processor 701, perform frequency modulation and amplification on the to-be-sent signal, and convert the to-be-sent signal into an electromagnetic wave for radiation through the antenna. In some embodiments, the electronic device 100 may further detect or scan a device near the electronic device 100 by transmitting a signal through a bluetooth module (not shown in FIG. 7) or a WLAN module (not shown in FIG. 7) in the wireless communication module 703, and establish a wireless communication connection with and perform data transmission with the nearby device. The bluetooth module may provide one or more bluetooth communication solutions including classic bluetooth (basic rate/enhanced data rate, BR/EDR) or bluetooth low energy (bluetooth low energy, BLE). The WLAN module may provide one or more WLAN communication solutions including Wi-Fi direct, Wi-Fi LAN, or Wi-Fi softAP.

The display screen 704 may be configured to display an image, a video, or the like. The display screen 704 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a Microled, a Micro-oLed, a quantum dot light emitting diode (quantum dot light emitting diodes, QLED), or the like. In some embodiments, the electronic device 100 may include 1 or N display screens 704, where N is a positive integer greater than 1.

The sensor module 705 may include a plurality of sensor devices, for example, a Hall sensor 705A and a capacitive proximity sensor 705B. The Hall sensor 705A may be configured to detect whether a foldable screen on the electronic device 100 is in a folded form. The capacitive proximity sensor 705B is configured to detect an environmental capacitance value and a human body proximity capacitance value. For a specific implementation, refer to the foregoing process. Details are not described herein again.

The sensor module 705 may further include a touch sensor (not shown in FIG. 7). The touch sensor may alternatively be referred to as a "touch device". The touch sensor may be arranged in the display screen 704.

The touch sensor and the display 704 constitute a touch screen, also referred to as a "touchscreen". The touch sensor may be configured to detect a touch operation acting on or near the touch sensor.

The audio module 706 may be configured to convert digital audio information to an analog audio signal for output, and may alternatively be configured to convert an analog audio input to a digital audio signal. The audio module 706 may be further configured to code and decode an audio signal. In some embodiments, the audio module 706 may further be disposed in the processor 701, or some functional modules of the audio module 706 are disposed in the processor 701.

The microphone 707, which may be also referred to as "voice transducer", may be configured to capture a sound signal in an environment around the electronic device, convert the sound signal to an electrical signal, and then preform a series of processing such as analog-to-digital conversion on the electrical signal to obtain an audio signal in a digital form that can be processed by the processor 701 of the electronic device. When making a call or sending voice information, a user may speak with the mouth approaching the microphone 707, to input the sound signal to the microphone 707. At least one microphone 707 may be arranged in the electronic device 100. In some other embodiments, two microphones 707 may be arranged in the electronic device 100, to capture the sound signal and implement a noise reduction function. In some other embodiments, the electronic device 100 may alternatively be provided with three, four, or more microphones 707 to acquire a sound signal, reduce noise, recognize a sound source, implement a directional recording function, and the like.

It should be noted that the electronic device 100 shown in FIG. 7 is merely used as an example for interpretation of the hardware structure of the electronic device provided this application, and should not constitute a specific limitation on this application.

As used in the foregoing embodiments, according to the context, the term "when..." may be interpreted as "if...", "after...", "in response to determining...", or "in response to detecting...". Similarly, according to the context, the phrase "when it is determined" or "if (a stated condition or event) is detected" may be interpreted as a meaning of "if it is determined", "in response to determining", "when (a stated condition or event) is detected", or "in response to detecting (a stated condition or event)".

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state driver), or the like.

A person of ordinary skill in the art may understand that all or some of the processes of the methods in the foregoing embodiments are implemented. The procedures may be completed by a computer program instructing related hardware. The program may be stored in a computer-readable storage medium. When the program is executed, the processes in the foregoing method embodiments may be included. The foregoing described storage medium includes: any medium that can store program code, such as an ROM, a random access memory RAM, a magnetic disk, or an optical disc.

## Claims

1. An adjustment method for a capacitive proximity sensor applied to a foldable device, applied to an electronic device having a foldable screen and a capacitive proximity sensor, and comprising:

    detecting, by the electronic device, a capacitance value in a first time period through the capacitive proximity sensor if the foldable screen is changed from a non-fully folded form to a fully folded form;
    determining, by the electronic device, a first environmental capacitance value based on the capacitance value in the first time period;
    detecting, by the electronic device, a first capacitance value through the capacitive proximity sensor when the electronic device determines that the foldable screen is in the fully folded form;
    determining, by the electronic device, a first human body proximity capacitance value based on the first capacitance value and the first environmental capacitance value; and
    determining, by the electronic device, that a human body approaches the electronic device when the first human body proximity capacitance value is greater than a first preset threshold.

2. The method according to claim 1, wherein after the determining, by the electronic device, that a human body approaches the electronic device, the method further comprises:
triggering, by the electronic device, a modem to work at a specified transmit power, or turning on, by the electronic device, a display screen.

3. The method according to claim 1 or 2, wherein the determining, by the electronic device, a first environmental capacitance value based on the capacitance value in the first time period specifically comprises:
determining, by the electronic device, a minimum capacitance value lasting for a first preset duration in the first time period as the first environmental capacitance value.

4. The method according to claim 1, wherein the determining, by the electronic device, a first human body proximity capacitance value based on the first capacitance value and the first environmental capacitance value specifically comprises:
subtracting, by the electronic device, the first environmental capacitance value from the first capacitance value, to obtain the first human body proximity capacitance value.

5. The method according to claim 1, wherein the electronic device further comprises a Hall sensor.

6. The method according to claim 5, wherein before the detecting, by the electronic device, a capacitance value in a first time period through the capacitive proximity sensor if the foldable screen is changed from a non-fully folded form to a fully folded form, the method further comprises:
when the Hall sensor detects that the foldable screen is in a folded form, the capacitive proximity sensor detects that a minimum capacitance value lasting for a first preset duration in a current time period is greater than a second preset threshold, and the electronic device allows calibration of an environmental capacitance value, determining, by the electronic device, that the foldable screen is changed from the non-fully folded form to the fully folded form.

7. The method according to claim 6, wherein the when the Hall sensor detects that the foldable screen is in a folded form, the capacitive proximity sensor detects that a minimum capacitance value lasting for a first preset duration in a current time period is greater than a second preset threshold, and the electronic device allows calibration of an environmental capacitance value, determining, by the electronic device, that the foldable screen is changed from the non-fully folded form to the fully folded form specifically comprises:

when a state flag bit of the Hall sensor is a first value, the capacitive proximity sensor detects that the minimum capacitance value lasting for the first preset duration is greater than the second preset threshold, and a calibration flag bit of the capacitive proximity sensor is a second value, determining, by the electronic device, that the foldable screen is changed from the non-fully folded form to the fully folded form.

8. The method according to claim 6, wherein the method further comprises:

detecting, by the electronic device, a second capacitance value when the electronic device determines that the foldable screen is in the non-fully folded form; and
determining, by the electronic device, a second human body proximity capacitance value based on the second capacitance value and the second environmental capacitance value, wherein the second environmental capacitance value is an environmental capacitance value determined by the electronic device when the electronic device is started while the foldable screen is in the non-fully folded form.

9. The method according to claim 8, wherein the detecting, by the electronic device, a second capacitance value when the electronic device determines that the foldable screen is in the non-fully folded form specifically comprises:

when the Hall sensor detects that the foldable screen is in a fully unfolded form, or when the Hall sensor detects that the foldable screen is in the folded form but the capacitive proximity sensor detects that the minimum capacitance value lasting for the first preset duration in the current time period is less than the second preset threshold, determining, by the electronic device, that the foldable screen is in the non-fully folded form; and
detecting, by the electronic device, the second capacitance value.

10. The method according to claim 9, wherein the when the Hall sensor detects that the foldable screen is in a fully unfolded form, or when the Hall sensor detects that the foldable screen is in the folded form but the capacitive proximity sensor detects that the minimum capacitance value lasting for the first preset duration in the current time period is less than the second preset threshold, determining, by the electronic device, that the foldable screen is in the non-fully folded form specifically comprises:
when a state flag bit of the Hall sensor is a third value, or when the state flag bit of the Hall sensor is a first value but the capacitive proximity sensor detects that the minimum capacitance value lasting for the first preset duration is less than the second preset threshold, determining, by the electronic device, that the foldable screen is in the non-fully folded form.

11. An electronic device, comprising a capacitive proximity sensor, one or more processors, and one or more memories, wherein the one or more memories and the capacitive proximity sensor are coupled to the one or more processors, the one or more memories are configured to store a computer-executable program, and when the one or more processors and the capacitive proximity sensor execute the computer-executable program, the electronic device is caused to perform the method according to any one of claims 1 to 10.

12. A chip system, comprising a processing circuit and an interface circuit, wherein the interface circuit is configured to receive code instructions and transmit the code instructions to the processing circuit, and the processing circuit is configured to execute the code instructions to cause the chip system to perform the method according to any one of claims 1 to 10.

13. A computer-readable storage medium, wherein the computer-readable storage medium stores a computer-executable program, and when the computer-executable program is run on an electronic device, the electronic device is caused to perform the method according to any one of claims 1 to 10.

Housing (overlay)

Capacitive proximity sensor

Printed circuit board (PCB)

(a)

Housing (overlay)

Capacitive proximity sensor

Printed circuit board (PCB)

(b)

FIG. 1A

FIG. 1B

FIG. 1C

FIG. 2A

FIG. 2B

FIG. 3A

Folding edge

21a        21b

(a)

22a
Screen B    22b
Screen A

Screen A
Screen B

(b)                    (c)

FIG. 3B

Screen A

Screen B

Screen C

FIG. 3C

S401: When an electronic device not in a fully folded form is started, the electronic device determines environmental offset data 1 through a capacitive proximity sensor, where the environmental offset data 1 is for eliminating an environmental capacitance value from a capacitance value detected by the capacitive proximity sensor when a foldable screen is not in the fully folded form

S402: The electronic device continuously detects a capacitance value through the capacitive proximity sensor, where the capacitance value detected by the capacitive proximity sensor is a sum of a human body proximity capacitance value and the environmental capacitance value

S403: The electronic device detects whether the foldable screen is changed from a non-fully folded form to the fully folded form

No

Yes

S406: When the foldable screen is in the non-fully folded form, the electronic device detects, based on the environmental offset data 1, the human body proximity capacitance value through the capacitive proximity sensor

S404: The electronic device adjusts the environmental offset data 1 to environmental offset data 2 based on a currently determined environmental capacitance value, where the environmental offset data 2 is for eliminating an environmental capacitance value from a capacitance value detected by the capacitive proximity sensor when the foldable screen is in the fully folded form

S407: When the electronic device detects that the human body proximity capacitance value is greater than a preset threshold 1, the electronic device determines that a human body approaches the electronic device

S405: When the foldable screen is in the fully folded form, the electronic device detects, based on the environmental offset data 2, the human body proximity capacitance value environmental through the capacitive proximity sensor

S408: The electronic device triggers a modem to work at a specified transmit power

FIG. 4

S501: An electronic device detects a state flag bit of a Hall sensor

S502: When detecting that the state flag bit of the Hall sensor is changed from 0 to 1, the electronic device sets a calibration flag bit of a capacitive proximity sensor to 1

S503: When detecting that the state flag bit of the Hall sensor is 1, the electronic device may detect a current capacitance value through the capacitive proximity sensor

S508: When detecting that the state flag bit of the Hall sensor is 0, the electronic device determines that the foldable screen is in a fully unfolded form, and performs step S406

S504: The electronic device determines whether a minimum capacitance value that lasts for preset duration 1 and that is detected by the capacitive proximity sensor is greater than a preset threshold 2

Yes

S505: The electronic device determines whether the calibration flag bit of the capacitive proximity sensor is 1

Yes

S506: The electronic device determines that a foldable screen is changed from a non-fully folded form to a fully folded form

S507: The electronic device sets the calibration flag bit of the capacitive proximity sensor to 0

FIG. 5A

An included angle is 180°, and a state
flag bit of a Hall sensor is equal to 0

The included angle is 150°, and the state
flag bit of the Hall sensor is equal to 1

FIG. 5B

FIG. 6

Electronic device 100

```
┌──────────────────┐
│  Processor 701   │
└──────────────────┘

┌──────────────────┐
│   Memory 702     │
└──────────────────┘

┌ ─ ─ ─ ─ ─ ─ ─ ─ ┐
│    Wireless      │
│  communication   │
│   module 703     │
└ ─ ─ ─ ─ ─ ─ ─ ─ ┘
```

Bus

```
┌──────────────────┐
│ Display screen   │
│      704         │
└──────────────────┘

┌──────────────────────────┐
│ Sensor module 705        │
│  ┌────────────────────┐  │
│  │   Hall sensor      │  │
│  │     705A           │  │
│  └────────────────────┘  │
│  ┌────────────────────┐  │
│  │    Capacitive      │  │
│  │ proximity sensor   │  │
│  │      705B          │  │
│  └────────────────────┘  │
└──────────────────────────┘

┌ ─ ─ ─ ─ ─ ─ ┐   ┌ ─ ─ ─ ─ ─ ┐
│Audio module │─ ─│ Microphone │
│    706      │   │    707     │
└ ─ ─ ─ ─ ─ ─ ┘   └ ─ ─ ─ ─ ─ ┘
```

FIG. 7

## INTERNATIONAL SEARCH REPORT

| International application No. |
| --- |
| **PCT/CN2024/112126** |

**A. CLASSIFICATION OF SUBJECT MATTER**

G01R27/26(2006.01)i; H04M1/72448(2021.01)i

According to International Patent Classification (IPC) or to both national classification and IPC

**B. FIELDS SEARCHED**

Minimum documentation searched (classification system followed by classification symbols)

IPC: G01R.H04M

Documentation searched other than minimum documentation to the extent that such documents are included in the fields searched

Electronic data base consulted during the international search (name of data base and, where practicable, search terms used)

CNTXT, ENTXTC, DWPI: 电容, 环境, 接近, 靠近, 期间, 人, 时段, 时间, 完全, 展开, 折叠, 最大, 最低, 最高, 最小, sar, capacitance, fold+, unfold+, transmitting power, antenna, proximity, anear, threshold

**C. DOCUMENTS CONSIDERED TO BE RELEVANT**

| Category* | Citation of document, with indication, where appropriate, of the relevant passages | Relevant to claim No. |
| --- | --- | --- |
| X | CN 116896779 A (HONOR DEVICE CO., LTD.) 17 October 2023 (2023-10-17) description, paragraphs [0037]-[0083], and figures 1-4 | 1-5, 11-13 |
| A | CN 113596242 A (HUAWEI TECHNOLOGIES CO., LTD.) 02 November 2021 (2021-11-02) entire document | 1-13 |
| A | CN 113905433 A (GUANGDONG OPPO MOBILE TELECOMMUNICATIONS CORP., LTD.) 07 January 2022 (2022-01-07) entire document | 1-13 |
| A | CN 115639409 A (SHANGHAI AWINIC TECHNOLOGY CO., LTD.) 24 January 2023 (2023-01-24) entire document | 1-13 |
| A | CN 115684734 A (SHANGHAI AWINIC TECHNOLOGY CO., LTD.) 03 February 2023 (2023-02-03) entire document | 1-13 |
| A | CN 116204081 A (SHANGHAI AWINIC TECHNOLOGY CO., LTD.) 02 June 2023 (2023-06-02) entire document | 1-13 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 November 2024** | **22 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/112126**

| C. | DOCUMENTS CONSIDERED TO BE RELEVANT | |
|---|---|---|
| Category* | Citation of document, with indication, where appropriate, of the relevant passages | Relevant to claim No. |
| A | KR 20090120774 A (LG ELECTRONICS INC.) 25 November 2009 (2009-11-25)<br>entire document | 1-13 |

Form PCT/ISA/210 (second sheet) (July 2022)

## INTERNATIONAL SEARCH REPORT
### Information on patent family members

International application No.

**PCT/CN2024/112126**

| Patent document cited in search report | | | Publication date (day/month/year) | Patent family member(s) | | | Publication date (day/month/year) |
|---|---|---|---|---|---|---|---|
| CN | 116896779 | A | 17 October 2023 | None | | | |
| CN | 113596242 | A | 02 November 2021 | WO | 2021209047 | A1 | 21 October 2021 |
| | | | | KR | 20220166858A | A | 19 December 2022 |
| | | | | US | 2023239391 | A1 | 27 July 2023 |
| | | | | EP | 4131910 | A1 | 08 February 2023 |
| | | | | CN | 113596242 | B | 18 October 2022 |
| CN | 113905433 | A | 07 January 2022 | None | | | |
| CN | 115639409 | A | 24 January 2023 | None | | | |
| CN | 115684734 | A | 03 February 2023 | None | | | |
| CN | 116204081 | A | 02 June 2023 | None | | | |
| KR | 20090120774 | A | 25 November 2009 | KR | 101537684 | B1 | 20 July 2015 |
| | | | | EP | 2124138 | A2 | 25 November 2009 |
| | | | | KR | 20090120774 | A | 25 November 2009 |
| | | | | KR | 20090121033 | A | 25 November 2009 |
| | | | | US | 2009289914 | A1 | 26 November 2009 |
| | | | | US | 8576181 | B2 | 05 November 2013 |
| | | | | EP | 2124138 | A3 | 24 December 2014 |
| | | | | KR | 101502002 | B1 | 12 March 2015 |
| | | | | EP | 2124138 | B1 | 11 September 2019 |

Form PCT/ISA/210 (patent family annex) (July 2022)

**REFERENCES CITED IN THE DESCRIPTION**

**Patent documents cited in the description**

- CN 202311637615